(19) Europäisches Patentamt
European Patent Office
Office européen des brevets

(11) Publication number: **0 153 107**
**A2**

# (12) EUROPEAN PATENT APPLICATION

(21) Application number: **85300856.3**

(22) Date of filing: **08.02.85**

(51) Int. Cl.⁴: **H 04 L 7/02**

(30) Priority: **10.02.84 US 579198**

(43) Date of publication of application: **28.08.85**
**Bulletin 85/35**

(84) Designated Contracting States: **AT BE CH DE FR GB IT LI LU NL SE**

(71) Applicant: **PRIME COMPUTER, INC., Prime Park, Natick Massachusetts 01760 (US)**

(72) Inventor: **Hogan, Thomas C., 25 Village Rock Lane, Natick Massachusetts 01760 (US)**

(74) Representative: **Blatchford, William Michael et al, Withers & Rogers 4 Dyer's Buildings Holborn, London EC1N 2JT (GB)**

(54) **Clock recovery apparatus and method for a ring-type data communications network.**

(57) A clock recovery apparatus provides a digital data stream from an incoming stream of raw data on a ring-type data communications network. The apparatus employs a clock generator having a fixed operating frequency for providing a clock signal, a receiving circuitry for receiving the incoming data stream, a phase comparison circuit for comparing the phase of the incoming data stream with the clock signal, and a phase selection circuit responding to the phase comparison circuit for discretely changing the relative phase difference of the data stream and the clock when the phase difference between them exceeds a predetermined phase tracking criterion. The clock is then employed for generating the digital data stream output. The output is preferably employed by a digital regenerator circuit which employs the same clock as used in the data clock recovery circuit. The apparatus can change the clock generator output phase, keeping the frequency fixed, or can insert a delay, of variable discrete increments, in the input data path.

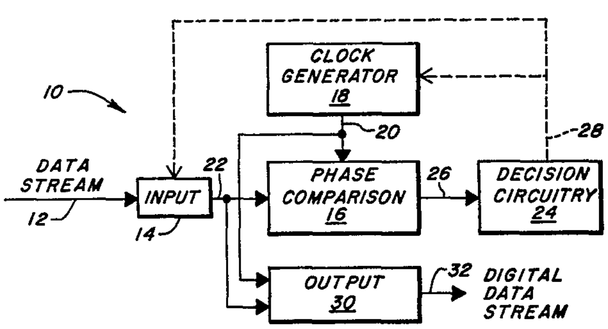

0153107

# CLOCK RECOVERY APPARATUS AND METHOD FOR A RING-TYPE DATA COMMUNICATIONS NETWORK

The invention relates generally to data communications networks, and in particular to a method and apparatus for improving the clock recovery in a ring-type data communications network having a digital regeneration stage.

## Background of the Invention

In a typical ring-type data communications network, the first step in recovering the received signal is to generate the clock necessary for sampling the signal. Digital regenerators as they are traditionally called, have, in the past, relied upon phase locked loops to extract the clock from the data and thus restore the timing at each node. When the number of nodes is large, or when there is no readily identifiable master reference frequency (as there is in many ring environments) this approach has serious drawbacks. As a result, special phase locked loops have been proposed and used to track the incoming phase and frequency. These systems are not particularly adaptable to VSLI techniques since they employ, *inter alia*, voltage controlled oscillators and other analog circuit devices.

It is therefore an object of the present invention to provide a method and apparatus for improving the tracking of an incoming data stream on a ring-type data communications network. Other objects of the invention are a method and apparatus which employ substantially digital logic, which is able to be used with the Manchester class of data encoding, which provides a digital data stream for a digital regenerator, and which improves the sampling of the incoming data stream signals.

Summary of the Invention

The invention relates to a clock recovery apparatus and method for recovering, from an incoming stream of data on a ring-type data communications network, a digital data stream. The apparatus features a clock generator having a fixed operating frequency for outputting a clock signal, receiving circuitry for receiving the data bit stream, circuitry for comparing the phase of the data stream and the clock signal, phase tracking circuitry responsive to the phase comparison circuitry for discretely changing the relative phase difference between the data stream and the clock signal when the phase difference exceeds a selected phase tracking criterion, and circuitry responsive to the clock generator and the receiving circuitry for generating the digital data stream.

In a particular embodiment of the invention, the clock generator has a plurality of phase outputs and circuitry is provided for selectively outputting, in response to a phase selection circuitry, one of the clock outputs, each clock output having one of a plurality of discrete phases. The separation between clock phases is less than a complete clock cycle.

In another aspect, the apparatus features a data receiving circuitry which is equivalent to a tapped delay line and which has a plurality of output taps for providing plural delayed replicas of the data stream. Each delayed replica is delayed by a fraction of a clock period from adjacent delayed replicas of the input data stream. The apparatus further features a multiplexing selection circuit for selecting one of the delayed replicas to output to the phase tracking circuitry and the digital data stream generating circuitry.

The method of the invention features the steps of generating a clock output signal having a fixed operating frequency, receiving the data stream, comparing the phase of the received data stream with the phase of the clock signal, discretely changing the relative phase of either said data stream and clock signal for reducing the phase difference between them when that phase difference exceeds a selected phase tracking criterion, and generating the digital data stream using the clock generator and the receiving circuitry.

According to the method, the relative phase difference between the data stream and the clock signal can be altered discretely by changing either the phase of the clock signal or introducing a delay in the data path.

Brief Description of the Drawings

Other objects, advantages, and features of the invention will be apparent from the following description of preferred embodiments of the invention taken together with the drawings in which:

Figure 1 is a general block diagram of a clock recovery apparatus according to the invention;

Figure 2 is a more detailed block diagram of a clock recovery apparatus employing delay in the data path;

Figure 3 is a more detailed block diagram of a clock recovery apparatus employing a clock generator having a plurality of discrete phase outputs; and

Figure 4 is a block diagram showing, in general terms, the digital regenerator structure in its relationship to the clock recovery apparatus of Figure 1.

Description of Preferred Embodiments

Referring to Figure 1, a clock recovery apparatus 10 receives an input data stream over a line 12, for example from a ring-type data communications network. The data stream is received at an input circuitry 14 and is output by the input circuitry 14 to a phase comparison circuitry 16. The phase comparison circuitry further receives a clock output signal from a clock generator 18 over a line 20. The output of the phase comparison circuitry 16 represents the phase difference between the data stream input over line 22 and the clock generator output over line 20. The output of the phase comparison is received by a decision circuitry 24 over a line 26. The output of the phase comparison circuitry 16 represents, typically for each clock cycle, the difference in phase between the two input signals. The decision circuitry analyzes those differences over time and provides, over a line 28, a phase selection signal indicating, generally, whether the phase difference is sufficiently small to be acceptable or whether the phase difference needs to be changed (reduced) by action of either the clock generator 18, the input circuitry 14, or both. Thus, the clock generator can change the phase of its output signal in response to the signals over line 28 and/or the input circuitry 14 can delay in time, by a fraction of a clock signal period, the data stream input to it over line 12.

The clock recovery apparatus 10 provides a digital output stream from an output circuit 30. The output represents the "digitization" of the input stream provided by input 22 in accordance with the clock generator output over line 20. The output digital data stream is intended for use with a digital regeneration circuit. The apparatus 10 thus provides, through the delay locked loop of Figure 1, a recovery of the clock from the incoming data stream. The resulting clock transitions provided from the clock generator output over line 20 should be as close as possible to the center of each bit cell and should be constantly correcting for the position of this "center" to main tain the clock transition at that center. The resulting digital data stream from output circuitry 30 over lines 32 thus corresponds to the input data stream with the amplitude noise eliminated and phase distortion reduced. This reduces the requirements imposed upon the next stage of digital regeneration and additionally, the recovered clock in the delayed lock loop apparatus 10 of Figure 1 can be used as a reference clock for, for example, a Manchester to NRZ translator if desired.

The apparatus of Figure 1 can, as indicated above, be implemented by (a) providing a plurality of phase clock output signals from clock generator 18, (b) introducing one of a plurality of discrete delays in the input data stream at input circuitry 14, or (c) by a combination of (a) and (b) above. Since either approach (a) or (b) above is generally satisfactory from a theoretical point of view, it remains for practical considerations to determine which approach, rather than both approaches, should be used. In the discussion which follows, implementations of each approach will be described and considered.

Referring now to Figure 2, in a preferred particular embodiment wherein a delay is introduced into the input data stream, the input circuitry 14 has a tapped delay line 40 an analog multiplexor 42. The tapped delay line can be visualized as a sequence of relatively short delays, the output of each of the successive delays being made available to the multiplexor over lines 44. Each of the outputs over lines 44 represents a replica of the data stream input over line 12 delayed by an amount of time which is some fraction of the clock generator clock cycle. The fraction can typically be for example 1/4 so that over two full clock periods there would be nine equally spaced delayed outputs. The multiplexor 42 receives a control input over line 28a from the decision circuitry 24. The illustrated decision circuitry includes a low pass filter 46 and a decision circuit 48. The low pass filter 46 receives the output of the phase comparator 16 over line 26. Filter 46 provides an averaging so that the "instantaneous" output of phase comparator 16 is averaged over, for example, thirty-two bit times. The decision circuitry 48 then evaluates and analyzes the output of the low pass filter 46, which is available over lines 50, and provides its output signal as noted above over line 28a. If the phase difference between the multiplexor output and the clock generator output is such that a different output tap of the tapped delay line would provide a smaller phase difference, the new tap is selected by the decision circuitry. Other decision criteria can be employed in order to maintain a sufficiently small phase difference between the output of the multiplexor and the clock generator to adequately track the input data stream clock. The output of the clock generator over line 20 and the output of the multiplexor, the delayed data stream over line 22, are input to a clocked output circuit 30 which, according to a preferred embodiment of the invention, is a clocked flip flop. The flip flop is clocked by that transition of the clock generator 20, which causes the delayed data stream over line 22 to be sampled in the center of a bit cell. The clock generator frequency is fixed (to the preciseness for example of a crystal clock) to a frequency which is common to all nodes in the ring network. Each of the nodes however has its own clock generator so that the clocks themselves are independent from one another.

Additionally, elastic intervals can be provided in the data stream so that if the delay provided by the tapped delay line 40 is in danger of overflowing, that is, is approaching the minimum or maximum delay available from the line, the selected tap can be moved during the elastic interval plus or minus one bit time of delay from the previously selected tap so as to move the selected tap to a center range of the tapped delay line. This effectively lengthens or shortens the elastic interval by one bit time. This has no effect upon data transmission since the elastic period is provided for exactly that purpose.

Referring now to Figure 3, in a second particular embodiment of the invention, the input data stream available line 12, is received and passed through an input circuitry 14 which is, in fact, merely a junction and has no effect upon the input data stream. The input data stream thus is passed directly to the output circuitry 30. The phase comparison circuitry 16, in this embodiment of the invention, has a phase comparison circuit 16, which receives the output of a one-half bit delay line 52 which has been inserted into the data stream path.

The half bit delay line 52 is employed to ensure that the transition from clock generator 18 will occur in the center of a bit time of the undelayed data available over line 22. The phase comparator 16' can be an analog phase comparator (similar for example to a quadrature phase comparator) so that amplitude noise such as edge bounce and impulse noise do not cause severe errors and distortions. As before, the phase comparator output over line 26 is averaged by a low pass filter 46 and the output of the low pass filter is received by the decision circuitry 48a. Decision circuitry 48a can for example sample the filter output once every thirty-two bit times and, from the sampled filter information, repeatedly make a decision whether to change the phase of the clock generator 12 by plus or minus one unit.

In the illustrated embodiment, the clock generator is preferably a programmable counter, for example a four stage counter, which is clocked by a clock source, for example a crystal controlled clock source, operating at four times the clock period of the data stream. Thereby, the counter can be adjusted in phase, either by inhibiting one count pulse to the four stage counter thereby in effect changing the phase by one quarter of a clock period or by adding an extra clock count to the counter thereby changing the phase by one quarter of a clock period in the other direction. In addition, the counter can be "preprogrammed" to implement the phase change. (As an alternative, the clock can be a four phase selectable clock, each phase being separated in time by one quarter of a bit rate and being available on a separate output line. The decision circuitry 48a can then control a multiplexor, similar to the multiplexor of the Figure 2 embodiment, for selecting the correct phase.) The decision to change the phase can be made, as in the Figure 2 embodiment, when the error between the clock transition and the center of the bit time exceeds one-half of the time difference between the phases of the clock over line 20 and the input data stream over line 54 available from the one-half bit delay. In this way, the clock transition occurs within a window of plus or minus one-half of one-quarter of a bit time or, in other words, the uncertainty is the difference in time between two adjacent clock phases. This is significantly better than the typical plus or minus one clock count that is available from pure digital phase locked loops.

As in the embodiment of Figure 2, the output circuitry 30 is preferably a clocked flipflop. Thus, the clock generator 18 provides the clocked output over line 20 to the output flipflop while the input data stream is fed directly from line 12 over line 22.

In this embodiment of the invention, the clock output has a further capability when a five stage counter is employed of providing to the decision circuitry 48a a sample clock which has a frequency equal to sixteen or thirty-two times the bit rate. This can be made available over a line 54.

When the input data over line 12 is encoded using a Manchester code, the clock frequency will be twice the data bit rate because, for a Manchester code, it is desirable to sample each bit twice to determine more reliably the nature of the incoming bit stream. For other input coding methods, the clock can run at the bit rate of the input, or at another known bit rate which depends upon the coding method.

Referring to Figure 4, the data recovery apparatus 10 can be employed with a digital regeneration circuit 60 such as that described in U.S. application No. 466,110 to Bahr and Hogan, filed February 14, 1983 and assigned to the assignee of this invention. The subject matter of that application is incorporated herein by reference. The two stages, according to the preferred embodiment of the invention, use the same basic master clock frequency over line 20 from for example clock generator 18 and thereby provide significant advantage in maintaining a stable and reliable apparatus.

Additions, subtractions, deletions, and other modifica tions of the disclosed particular embodiments of the invention will be obvious to those skilled in the art and are within the scope of the following claims.

CLAIMS:

1. Clock recovery apparatus for recovering from an incoming stream of data on a ring-type data communications network, a digital data stream, said apparatus comprising:

a clock generator having a fixed operating frequency for outputting a clock signal,

means for receiving said incoming data stream,

means for comparing the phase of said data stream and said clock signal,

phase selection means responsive to said phase comparison means for discretely changing the relative phase difference between said data stream and said clock signal when said phase difference exceeds a phase tracking criterion, and

means responsive to said clock generator and said receiving means for generating said digital data stream.

2. The clock recovery apparatus of claim 1 wherein:

said clock generator comprises means for selectively outputting, in response to said phase selection means, a clock signal having one of a plurality of discrete phases.

3. The clock recovery apparatus of claim 2 wherein:

said clock generator comprises a presettable programmable counter.

4. The clock recovery apparatus of claim 1 wherein:

said data receiving means comprises a tapped analog delay line having a plurality of output taps for providing plural replicas of said data stream delayed by different fractions of a clock generator clock period.

5. The apparatus of claim 4 wherein:

said selection means comprises means for selecting from among ones of said delayed replicas for reducing said phase difference.

6. A clock recovery apparatus for recovering the clock from an incoming stream of data in a data communications ring network comprising:

a clock generator having means for outputting a fixed frequency clock signal, said clock generator having a discretely adjustable phase,

phase comparison means for comparing the phase of the clock signal with the phase of the incoming bit stream and for outputting a signal representing a difference in the phase of said bit stream and said clock signal,

phase selection means responsive to said phase difference signal for selecting one said discrete phase output clock signal from said clock generator, and

a clocking means responsive to said data stream and said selected clock signal for generating a digital data stream.

7. The clock recovery system of claim 6 further wherein:

said clock means is a presettable programmable counter, and

said selection means comprises:

a low pass filtering means responsive to said phase comparison means for outputting an averaged phase comparison signal, and

a threshold decision means responsive to said low pass filter output for repeatedly selecting a discrete phase of said clock signal.

8. The clock recovery system of claim 7 further wherein said input data is of a Manchester class, and further comprising:

a one-half clock time delay, said delay being inserted between said data stream and said phase comparison means,

whereby said clocking means clocks said data stream at mid-transition locations.

9. A clock recovery apparatus for recovering the clock from an incoming stream of data in a data communications ring network comprising:

a clock generator for outputting a fixed frequency clock signal,

a tapped, delay line for receiving said data stream and having a plurality of delay taps, said taps providing said data stream delayed in time, said delays corresponding to a fraction of a clock generator clock period,

output selection means for selecting from among said delayed data streams for providing said delayed data stream at its output,

phase comparison means for generating a relative phase signal representing the relative phase difference between said clock signal and said selected delayed data stream,

phase selection means for providing a control signal to said output selection means for reducing the phase difference when the phase difference exceeds a predetermined criteria, and

clocking means responsive to the selected data stream from the output selection means and the clock signal for generating a digital data stream.

10. The apparatus of claim 9 wherein:

said output selection means is a multiplexing element and

said phase selection means comprises:

a low pass filter means for averaging the phase difference over a plurality of clock cycles, and

thresholding means for changing the selected delay line tap when said averaged phase difference exceeds a predetermined value.

11. The apparatus of claims 1, 6, or 9 further comprising:

a digital regenerator for receiving said digital data stream and operating at a clock frequency and phase locked to the clock generator.

12. The apparatus of claim 11 further wherein said clock generator provides the clock signals for said digital regenerator.

13. A clock recovery method for recovering the clock from an incoming stream of data in a ring-type data communications network for generating a digital data stream, the method comprising the steps of:

generating a clock signal at a fixed operating frequency,

comparing the phase of the clock signal with the phase of the data stream,

discretely changing the phase difference between said incoming data stream and said clock signal when said phase difference exceeds a selected phase tracking criteria, and

generating said digital data stream using said clock signal.

14. The method of claim 13 wherein said discretely changing step comprises the step of:

selectively and discretely changing, in response to the phase difference between the data stream and the clock signal, the phase of the clock signal.

15. The method of claim 13 wherein said discretely changing step further comprises the steps of:

passing said data stream through a delay line having a plurality of output taps representing sequentially delayed replicas of said data stream, and

selecting one of said delayed replicas of said data stream,

wherein said adjacent delayed replicas are delayed from each other a time corresponding to a fraction of a clock period.

16. The method of claim 13, 14, or 15 further comprising the step of:

passing said digital data stream to a data regeneration system, and

employing the clock signal in said digital regeneration system.

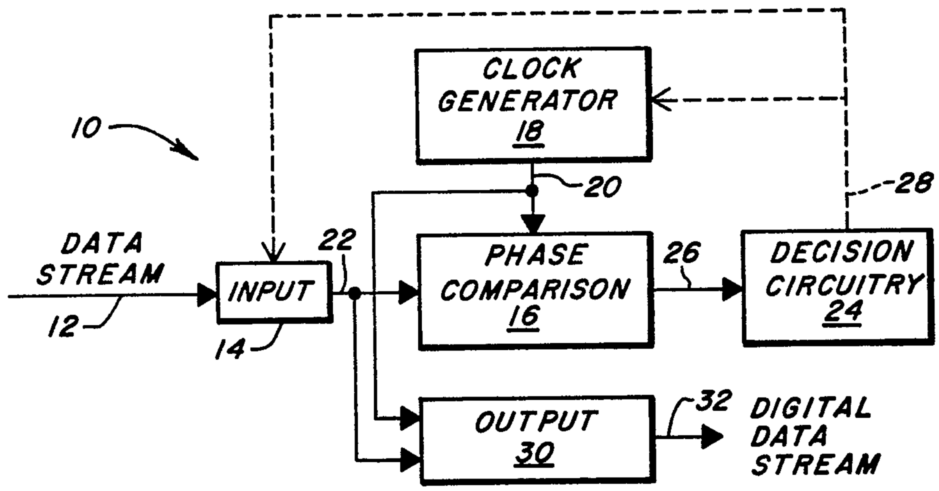


FIG. 1

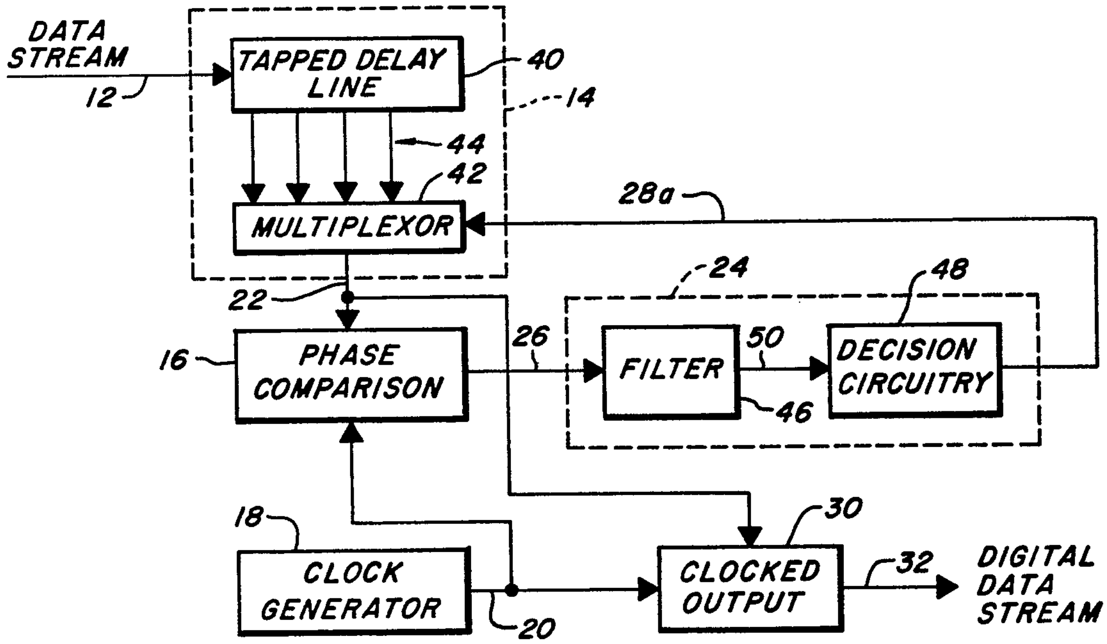


FIG. 2

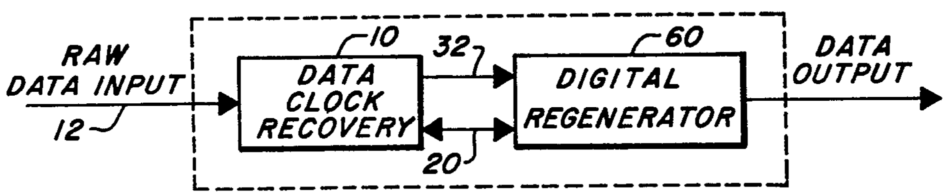


FIG. 4

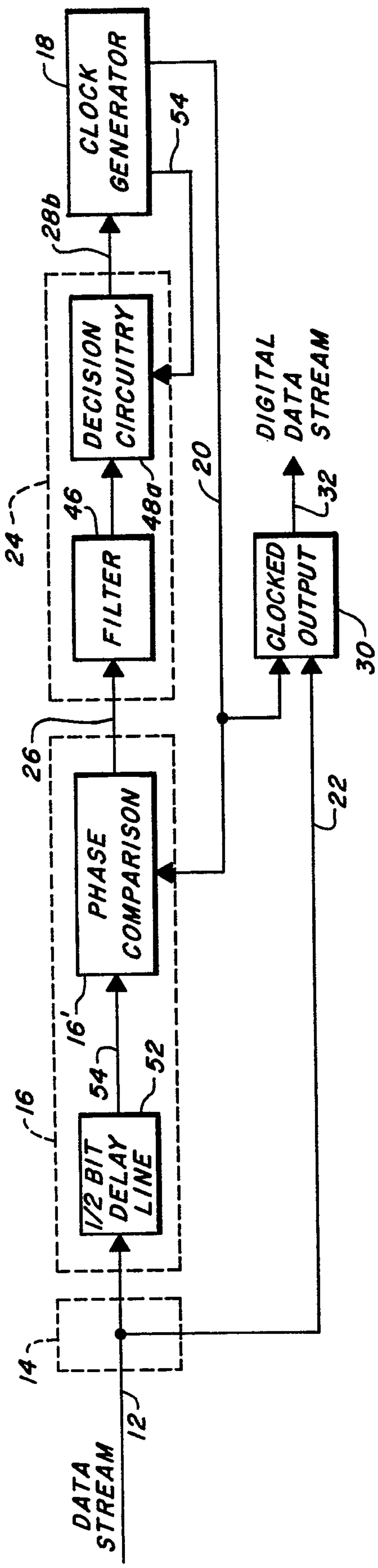
DATA STREAM
12
14
16
1/2 BIT DELAY LINE
54
52
16'
PHASE COMPARISON
26
24
FILTER
46
48a
DECISION CIRCUITRY
28b
CLOCK GENERATOR
18
54
20
22
CLOCKED OUTPUT
30
32
DIGITAL DATA STREAM

FIG. 3